# EUROPÄISCHE PATENTANMELDUNG

(11) **EP 3 842 318 A1**
(43) Veröffentlichungstag der Anmeldung: **30.06.2021**
(21) Anmeldenummer: 19219240.9
(22) Anmeldetag: 23.12.2019
(51) Int. Cl.: B61L 27/00, H04W 84/18, B61L 1/16, B61L 5/12

(54) **VERFAHREN ZUR DATENÜBERTRAGUNG INNERHALB EINES SCHIENENGEBUNDENEN VERKEHRSSYSTEMS, DATENÜBERTRAGUNGSSYSTEM, SCHIENENGEBUNDENES VERKEHRSSYSTEM MIT EINEM DATENÜBERTRAGUNGSSYSTEM UND VERWENDUNG VON KOMMUNIKATIONSEINHEITEN AN FELDELEMENTEN**

(71) Anmelder: Thales Management & Services Deutschland GmbH, 71254 Ditzingen (DE)
(72) Erfinder: Maringer, Daniel, 71229 Leonberg (DE)
(74) Vertreter: Kohler Schmid Möbus Patentanwälte

(57) **Zusammenfassung**

Die Erfindung betrifft ein Verfahren zur Datenübertragung innerhalb eines schienengebundenen Verkehrssystems (1) bestehend aus mehreren Feldelementen (12, 14 I-V, 16 I-V, 18 I-II), wobei die Datenübertragung über einen flexiblen drahtlosen Übertragungspfad (36, 40) zwischen einem Absender-Feldelement (16 I) und einer Kontrolleinheit (24) entlang verfügbarer Feldelemente (12, 14 I-V, 16 I-V, 18 I-II) erfolgt. Die Erfindung betrifft weiterhin ein Datenübertragungssystem (10) zur Anwendung des Verfahrens sowie ein schienengebundenes Verkehrssystem (1) mit einem solchen Datenübertragungssystem (10). Weiterhin betrifft die Erfindung die Verwendung von Kommunikationseinheiten (26) an Feldelementen (12, 14 I-V, 16 I-V, 18 I-II) eines schienengebundenen Verkehrssystems (1) zur Ausbildung des Datenübertragungssystems (10).

## Beschreibung

### Hintergrund der Erfindung

Die Erfindung betrifft ein Verfahren zur Datenübertragung innerhalb eines schienengebundenen Verkehrssystems mit einem ersten Feldelement mit einer Kommunikationseinheit und mindestens einem weiteren Feldelement mit einer weiteren Kommunikationseinheit, wobei die Datenübertragung zwischen dem ersten Feldelement, und einer Kontrolleinheit des schienengebundenen Verkehrssystems entlang eines Übertragungspfades erfolgt.

Feldelemente dienen innerhalb von schienengebundenen Verkehrssystemen der Überwachung und Steuerung des Schienenverkehrs.

Herkömmliche Feldelemente weisen Datenleitungen zur Datenübertragung auf, die jedoch aufwendig verlegt werden müssen. In Einzelfällen, insbesondere in unzugänglichen Abschnitten des Verkehrssystems weisen die Feldelemente bestenfalls eine Sende- und Empfangseinheit auf, die über ein integriertes Mobilfunkmodul mit einer Mobilfunkstation kommuniziert. In vorgegebenen Sendezeiträumen übertragen die Feldelemente über eine Mobilfunkverbindung einsatzspezifische Daten zur Mobilfunkstation einer Kontrollzentrale und empfangen Weisungen von der Mobilfunkstation.

Derartig ausgerüstete Feldelemente sind beispielsweise aus der [1] und der [3] bekannt geworden.

Die Feldelemente müssen jedoch mit kostenpflichtigen Mobilfunkmodulen und Verträgen in ein bestehendes Mobilfunknetz integriert werden. Besteht keine Netzabdeckung, durch das bestehende Mobilfunknetz kann keine Datenübertragung erfolgen. Dies ist insbesondere in Tunneln und im ländlichen Raum der Fall. Bei Störungen der Verbindung kann keine Datenübertragung durchgeführt werden und in Folge bedarf es in den meisten Fällen den Einsatz von Fachkräften vor Ort.

In [4] und [5] wird eine Kommunikation zwischen streckenseitig angeordneten Funkelementen und vorbeifahrenden Zügen beschrieben. Die Verbindung wird dabei innerhalb der Signalreichweite zu den streckenseitig angeordneten Funkelementen hergestellt. Zur Verbindung der streckenseitigen Funkelemente werden Kabel und Glasfaserleitungen genutzt, was einen erheblichen Aufwand sowie Kosten verursacht.

Die [2] beschreibt ein drahtloses Netzwerk eines intelligenten Verkehrssteuerungssystems. Die Netzwerkteilnehmer sind dabei dazu ausgebildet, Informationen an die anderen Netzwerkteilnehmer zu senden, um die Steuerung zu verbessern. Die Netzwerkteilnehmer sind dabei jederzeit von den anderen Netzwerkteilnehmern erreichbar und können direkt miteinander kommunizieren. Ein Umgehen von Störungen ist dabei nicht vorgesehen und führt zu Verzögerungen der Datenübertragung.

### Aufgabe der Erfindung

Es ist Aufgabe der Erfindung ein hinsichtlich des Übertragungspfades flexibles Netzwerk zur kostengünstigen Datenübertragung zwischen bestehenden Feldelementen eines schienengebundenen Verkehrssystems bereitzustellen, bei dem die Datenübertragung trotz Störung des Übertragungspfades erfolgen kann.

### Beschreibung der Erfindung

Die Aufgabe wird erfindungsgemäß gelöst durch ein Verfahren der eingangs genannten Art, dadurch gekennzeichnet, dass der Übertragungspfad in Abhängigkeit der Verfügbarkeit der weiteren Feldelemente ermittelt wurde, und dass die Datenübertragung über mindestens eines der weiteren Feldelemente erfolgt, und dass die Daten zwischen den Feldelementen drahtlos übertragen werden.

Hierdurch wird eine hohe Flexibilität bei der Wahl des Übertragungspfades erreicht, was besonders vorteilhaft für die Umgehung von Störungen im schienengebundenen Verkehrssystem ist.

Die Übermittlung von Daten zwischen den Feldelementen des schienengebundenen Verkehrssystems erfolgt drahtlos. Hierdurch wird keinerlei Datenleitung zwischen den Feldelementen benötigt, was eine kostengünstige Installation und eine einfache Einbindung neuer Feldelemente ermöglicht. Die Einbindung der Kontrolleinheit in den Verbund der Feldelemente des schienengebundenen Verkehrssystems kann drahtlos und/oder über eine Datenleitung erfolgen.

Unter dem Übertragungspfad wird im Folgenden die Übermittlung von Daten über Feldelemente des schienengebundenen Verkehrssystems von dem ersten Feldelement (Absender-Feldelement) zu der Kontrolleinheit und/oder von der Kontrolleinheit zu einem letzten Feldelement (Empfänger-Feldelement) verstanden. Die Anzahl der auf dem Übertragungspfad liegenden Zwischen-Feldelemente ist dabei abhängig vom individuellen Verlauf des Übertragungspfades über die Feldelemente des schienengebundenen Verkehrssystems sowie der örtlichen Beabstandung des ersten Feldelements, beziehungsweise letzten Feldelements, von der Kontrolleinheit. Mit steigender Anzahl der Feldelemente in dem schienengebundenen Verkehrssystem steigt die Flexibilität bei der Ermittlung, beziehungsweise der Wahl des Übertragungspfades.

Erfindungsgemäß erfolgt die Datenübertragung zwischen verschiedenen Feldelementen des schienengebundenen Verkehrssystems. Somit können Kommunikationseinheiten verwendet werden, die eine geringere Reichweite als Mobilfunksender aufweisen. Die Daten werden zur Übermittlung von Feldelement zu Feldelement weitergereicht. Bestehende Feldelemente können mit Kommunikationseinheiten nachgerüstet werden, so dass das erfindungsgemäße Verfahren auch mit bereits bestehenden Systemen durchgeführt werden kann.

Der Übertragungspfad umfasst das erste Feldelement und mindestens ein weiteres Feldelement. Der Übertragungspfad ist lediglich entlang zum Zeitpunkt der Ermittlung des Übertragungspfades verfügbarer Feldelemente ausgebildet. Die Verfügbarkeit der Feldelemente ist dabei abhängig von der Signalreichweite der benachbarten Feldelemente, zeitweisen und/oder dauerhaften Störungen des Signals zwischen den benachbarten Feldelementen sowie der Auslastung der Feldelemente.

Dauerhafte Störungen des Signals zwischen benachbarten Feldelementen sind beispielsweise bedingt durch die Landschaft und/oder der Gebäude, insbesondere Tunnel, die zu einem starken Abschwächen der Signalstärke führen. Zeitweise Störungen sind zeitlich begrenzt und beispielsweise bedingt durch Wettereinflüsse, technische Defekte an Feldelementen, hohem Sendeaufkommen mit einhergehendem Datenstau, Sendeverboten sowie im Übertragungspfad befindliche Züge, insbesondere Güterzüge, was zu einer starken Einschränkung der Datenübertragung führen kann. Die Aufzählungen sind dabei nicht abschließend sondern lediglich von beispielhaftem Charakter.

Zur Ermittlung eines Übertragungspfades entlang verfügbarer Feldelemente wird eine Verfügbarkeitsanfrage durch das erste Feldelement an alle zu diesem Zeitpunkt erreichbaren benachbarten Feldelemente versendet. Durch Beantwortung der Verfügbarkeitsanfrage durch die benachbarten Feldelemente werden diese im ersten Feldelement als verfügbar kategorisiert.

Wird eine Verfügbarkeitsanfrage durch ein benachbartes Feldelement nicht beantwortet, kommt dieses für eine Datenübertragung nicht in Betracht und wird als nicht verfügbar kategorisiert. Prinzipiell ist eine andere Kategorisierung sowie eine abweichende Logik zur Ermittlung der Verfügbarkeit denkbar, beispielsweise durch explizite Meldung der Verfügbarkeit oder Nicht-Verfügbarkeit durch die benachbarten Feldelemente.

Die Verfügbarkeitsanfrage wird in einem, insbesondere mehreren, weiteren Schritten von den benachbarten Feldelementen an deren benachbarte Feldelemente und die Kontrolleinheit weitergereicht, die wiederum auf die Verfügbarkeitsanfrage reagieren. Die Verfügbarkeitsanfrage wird insbesondere solange durch das schienengebundene Verkehrssystem weitergereicht, bis keine neuen Feldelemente ihre Verfügbarkeit bestätigten.

Zudem muss zumindest ein Feldelement die Verfügbarkeit der Kontrolleinheit und/oder die Datenverbindung zur Kontrolleinheit bestätigen. Die Verfügbarkeit der Feldelemente und der Kontrolleinheit wird dabei an das erste Feldelement übermittelt, das zumindest einen Übertragungspfad entlang der verfügbaren Feldelemente des Verbunds zu der Kontrolleinheit ermittelt.

Insbesondere wird die Verfügbarkeitsanfrage von allen Feldelementen und der Kontrolleinheit dazu verwendet, zumindest einen Übertragungspfad zwischen jedem möglichen ersten Feldelement (jedem möglichen Absender-Feldelement) zu der Kontrolleinheit, beziehungsweise zumindest einen Übertragungspfad von der Kontrolleinheit zu jedem möglichen letzten Feldelement (jedem möglichen Empfänger-Feldelement) zu ermitteln. Besonders bevorzugt werden mehrere Übertragungspfade durch die Feldelemente und die Kontrolleinheit ermittelt, um bei zeitweisen Störungen besonders schnell auf alternative Übertragungspfade zurückgreifen zu können.

Alternativ oder zusätzlich kann vorgesehen sein, dass durch die Verfügbarkeitsanfragen die Verfügbarkeit benachbarter Feldelemente sowie der Kontrolleinheit geprüft wird und die Verfügbarkeit lediglich den benachbarten Feldelementen bekannt ist. Hierdurch wir ein Übertragungspfad von dem ersten Feldelement (Absender-Feldelement) zu der Kontrolleinheit, beziehungsweise von der Kontrolleinheit zu dem letzten Feldelement (Empfänger-Feldelement), durch Teilübertragungspfade zwischen benachbarten Feldelementen zusammengesetzt, wobei dem ersten Feldelement, beziehungsweise der Kontrolleinheit, der gesamte Übertragungspfad unbekannt ist.

Der zumindest eine ermittelte Übertragungspfad kann eine zeitlich begrenzte Gültigkeit aufweisen, um eine regelmäßige Durchführung der Verfügbarkeitsanfrage zu erzwingen. Hierdurch wird die Aktualität des zumindest einen Übertragungspfades entlang der verfügbaren Feldelemente sichergestellt.

Die Datenübermittlung zwischen einem ersten Feldelement (Absender-Feldelement) und der Kontrolleinheit, beziehungsweise zwischen Kontrolleinheit und letztem Feldelement (Empfänger-Feldelement) erfolgt im ungestörten Fall über den zumindest einen ermittelten Übertragungspfad.

Die Kontrolleinheit stellt einen zentralen Knotenpunkt des schienengebundenen Verkehrssystems dar und ist dazu ausgebildet Daten von den Feldelementen zu empfangen und/oder Daten an die Feldelemente zu senden. Hierdurch kann beispielsweise der Softwarestand eines Feldelements abgefragt und gegebenenfalls mittels Fernwartung aktualisiert werden. Die Kontrolleinheit kann dabei drahtlos und/oder mittels einer Datenleitung mit zumindest einem Feldelement des Verbunds aus Feldelementen verbunden sein.

Insbesondere kann die Kontrolleinheit den zentralen Knotenpunkt für mehrere Verbünde von Feldelementen ausbilden.

Bevorzugt ist eine Weiterbildung des erfindungsgemäßen Verfahrens, bei dem zur Datenübertragung zwischen den Feldelementen ein autonomes Ad-hoc-Netzwerk aufgebaut wird. Die Kommunikationsverbindung zwischen den Feldelementen des Übertragungspfades wird auf Anforderung (on demand), aufgebaut, wenn Daten übertragen werden sollen. Die Feldelemente bilden dabei Funkknoten des Ad-hoc-Netzwerks. Dabei verbinden sich die Feldelemente selbständig miteinander.

Bei auftretender Störung, die eine Datenübermittlung entlang des zumindest einen ermittelten Übertragungspfades verhindert, erfolgt eine Rückmeldung des unmittelbar vor der Störung befindlichen Feldelements im ermittelten Übertragungspfads an das erste Feldelement (Absender-Feldelement), beziehungsweise die Kontrolleinheit. Mit anderen Worten meldet das bei der Übermittlung der Daten zuletzt erreichte Glied (Feldelement) der Übertragungskette (Übertragungspfad) die Störung des Übertragungspfads an das erste Feldelement (Absender-Feldelement), beziehungsweise die Kontrolleinheit, zurück. Wurde ein weiterer Übertragungspfad während der Verfügbarkeitsanfrage ermittelt, kann die Datenübermittlung entlang des weiteren ermittelten Datenübertragungspfads erfolgen.

Insbesondere kann vorgesehen sein, dass das unmittelbar vor der Störung befindliche Feldelement einen während der Verfügbarkeitsanfrage selbst ermittelten Übertragungspfad für die weitere Übermittlung der Daten an die Kontrolleinheit verwendet. Besonders bevorzugt, teilt das unmittelbar vor der Störung befindliche Feldelement dem ersten Feldelement (Absender-Feldelement) anschließend den geänderten Übertragungspfad mit, den das erste Feldelement (Absender-Feldelement) als alternativen Übertragungspfad hinterlegt.

Weiterhin kann vorgesehen sein, dass das unmittelbar vor der Störung befindliche Feldelement, bei vergeblicher Übermittlung der Daten, insbesondere auf einem alternativen Übertragungspfad, die Daten an zumindest ein Feldelement sendet, dass sich im (ursprünglichen) Übertragungspfad vor dem unmittelbar vor der Störung befindlichen Feldelement befindet und die Daten über zumindest einen während der Verfügbarkeitsanfrage ermittelten Übertragungspfad weiterleitet. Insbesondere kann diese Vorgehensweise wiederholt werden, bis die Daten an das erste Feldelement (Absender-Feldelement) zurückverwiesen sind.

Alternativ oder zusätzlich kann vorgesehen sein, dass das erste Feldelement (Absender-Feldelement) eine erneute Verfügbarkeitsanfrage an den Verbund der Feldelemente sendet und zumindest ein neuer Übertragungspfad entlang verfügbarer Feldelemente ermittelt wird. Dies ermöglicht ein besonders einfaches und schnelles Umgehen von Störungen.

Weiterhin ist eine Weiterbildung des erfindungsgemäßen Verfahrens möglich, bei der für jede Datenübertragung ein Übertragungspfad ermittelt wird.

Unter einer erfindungsgemäßen Datenübertragung wird ein zusammenhängendes Datenpaket verstanden, welches als Einheit übermittelt werden kann. Hierbei kann vorgesehen sein, dass zu übermittelnde Daten in mehrere Datenpakete unterteilt und durch das erste Feldelement (Absender-Feldelement) und/oder die Kontrolleinheit einzeln versendet werden. Hierdurch können große Datenmengen paketweise versendet und beim Empfänger wieder zu einer Einheit zusammengefügt werden.

Hierbei kann vorgesehen sein, dass vor jeder Datenübertragung durch ein Feldelement, beziehungsweise durch die Kontrolleinheit, eine Verfügbarkeitsanfrage gesendet und ein Übertragungspfad entlang verfügbarer Feldelemente ermittelt wird. Eine Übermittlung von Daten, umfassend mehrere Datenpakete kann dabei über einen einzelnen Übertragungspfad oder über mehrere Übertragungspfade durchgeführt werden. Hierdurch können zeitweise Störungen besonders effektiv vermieden werden.

Insbesondere kann vorgesehen sein, dass die Ermittlung des zumindest einen Übertragungspfades unter Berücksichtigung zusätzlicher Entscheidungskriterien erfolgt. Zusätzliche Entscheidungskriterien sind beispielsweise Datengröße und/oder Datenwichtigkeit. Die Aufzählung ist dabei nicht abschließend zu verstehen. Beispielsweise kann vorgesehen sein, die Übermittlung von großen Datenmengen über verfügbare Feldelemente durchzuführen, die hinsichtlich des Datenverkehrs weniger ausgelastet sind und/oder Datenpakete mit hoher Wichtigkeit über einen möglichst kurzen und schnellen Übertragungspfad von verfügbaren Feldelementen durchzuführen. Insbesondere ist denkbar, eine Optimierung des ermittelten Übertragungspfades bezüglich einer minimalen Anzahl an Kommunikationspartnern, beziehungsweise einer minimalen Anzahl an auf dem Übertragungspfad befindlichen Feldelementen durchzuführen.

Eine besonders bevorzugte Weiterbildung des erfindungsgemäßen Verfahrens sieht vor, dass während der Datenübertragung die Verfügbarkeit der Feldelemente, insbesondere in regelmäßigen Zeitabständen, überprüft wird und der ermittelte Übertragungspfad geändert wird, wenn die Verfügbarkeit eines der Feldelemente, über die der zuvor ermittelte Übertragungspfad verläuft, nicht mehr gegeben ist. Besonders vorteilhaft entfällt hierbei das Versenden einer Verfügbarkeitsanfrage an den Verbund der Feldelemente, da lediglich die verfügbaren Feldelemente entlang des ermittelten Übertragungspfades zur Bestätigung ihrer Verfügbarkeit angefragt werden.

Weiterhin bevorzugt ist eine Weiterbildung des erfindungsgemäßen Verfahrens, bei der das erste, insbesondere alle, Feldelemente zum Empfang von Anweisungen ausgebildet sind. Besonders vorteilhaft können somit Anweisungen der Kontrolleinheit an die Feldelemente gesendet werden. Beispielsweise kann mittels Fernzugriff ein Diagnoseprozess gestartet, eine Weichenstellung geändert und/oder ein Signal geschalten werden. Die Aufzählung ist nicht abschließend zu verstehen.

In einer besonderen Weiterbildung des erfindungsgemäßen Verfahrens ist vorgesehen, dass das erste Feldelement die Verfügbarkeit der benachbarten Feldelemente, insbesondere aller Feldelemente, durch Empfang von Statusmitteilungen und/oder durch die Signalstärke der anderen Feldelemente ermittelt. Hierbei kann vorgesehen sein, dass die Feldelemente zumindest regelmäßig, insbesondere dauerhaft, Statusmitteilungen versenden, um den benachbarten Feldelementen den Status ihrer Verfügbarkeit mitzuteilen.

Alternativ oder zusätzlich kann eine Statusmitteilung durch zeitweises Aktivieren eines ansonsten überwiegend inaktiven Feldelements, insbesondere durch Detektieren der Signalstärke des Feldelements erfolgen. Bei mehreren überwiegend inaktiven Feldelementen kann zudem vorgesehen sein, dass bei Aktivierung eines Feldelements und/oder bei einer Verfügbarkeitsanfrage eine Anweisung zur kurzzeitigen Aktivierung der benachbarten inaktiven Feldelemente (aufwecken) erfolgt, um deren Verfügbarkeit zu ermitteln.

In einer bevorzugten Weiterbildung des erfindungsgemäßen Verfahrens ist vorgesehen, dass der Zustand, insbesondere Diagnosedaten, des ersten Feldelements mittels der Datenübertragung zur Kontrolleinheit übertragen werden.

Die über den Verbund der Feldelemente übermittelten Daten können nach Art des Feldelements unterschiedlich sein. Generell ist das Verfahren zur Übertragung jedweder Daten geeignet. Im Einsatzbereich von schienengebundenen Verkehrssystemen stellen jedoch Messdaten und Diagnosedaten von Feldelementen einen Großteil des übertragenen Datenvolumens dar. Messdaten sind beispielsweise Temperaturen, Drücke, Achszahlen usw. Diagnosedaten sind beispielsweise Softwareversionsstände, Hardware-Versionsstände, Konfigurationsdatenversionen, interne Zustandsinformationen des Feldelements, Information über Hardwarefehler des Feldelements, insbesondere fehlerhafte Kabelverbindungen, sowie Informationen über automatische Neustarts. Die Aufzählung ist dabei nicht abschließend zu verstehen.

Bevorzugt ist weiterhin eine Weiterbildung des erfindungsgemäßen Verfahrens bei der zur Datenübertragung ausschließlich die auf dem Übertragungspfad befindlichen Feldelemente miteinander kommunizieren. Dies begünstigt eine möglichst geringe Auslastung der Feldelemente durch minimalen Datenverkehr.

Die der Erfindung zugrunde liegende Aufgabe wird weiterhin gelöst durch ein Datenübertragungssystem eines schienengebundenen Verkehrssystems zur Ausführung eines erfindungsgemäßen Verfahrens mit einem ersten Feldelement und einer über eine Schnittstelle mit dem Feldelement verbundenen Kommunikationseinheit, mindestens einem weiteren Feldelement mit einer weiteren Kommunikationseinheit und einer Kontrolleinheit, wobei die Kommunikationseinheiten und die Kontrolleinheit zum Senden und Empfangen von Informationen ausgebildet sind, dadurch gekennzeichnet, dass die Kommunikationseinheiten zur Ermittlung eines geeigneten Übertragungspfades entlang der verfügbaren Kommunikationseinheiten von und/oder zu der Kontrolleinheit ausgebildet sind.

Die Feldelemente sind über die Kommunikationseinheiten dazu eingerichtet Verfügbarkeitsanfragen benachbarter Feldelemente zu beantworten sowie eigene Verfügbarkeitsanfragen zu senden.

Das Datenübertragungssystem umfasst insbesondere einen Verbund von 2 bis 20, insbesondere 20 bis 100, besonders bevorzugt 100 bis 1000, Feldelementen und einer Kontrolleinheit. Die Feldelemente des Datenübertragungssystems sind dabei innerhalb des Verbunds der Feldelemente derart angeordnet, insbesondere örtlich beabstandet, dass zumindest zwei benachbarte Feldelemente - insbesondere im störungsfreien Zustand - Daten sowohl unmittelbar untereinander als auch unmittelbar und/oder mittelbar mit der Kontrolleinheit austauschen können. Mit anderen Worten besteht ein Verkehrssystem aus Feldelementen dann, wenn jedes Feldelement des Verbunds direkt oder über andere Feldelemente mit jedem anderen Feldelement des Verbunds und der Kontrolleinheit kommunizieren kann.

Feldelemente im Sinne eines schienengebundenen Verkehrssystems sind streckenseitige Einrichtungen wie beispielsweise Weichen, Signale, streckenseitige Elektronik, Achszähler usw. Die Aufzählung ist dabei nicht abschließend zu verstehen.

Bevorzugt ist eine Ausführungsform des erfindungsgemäßen Übertragungssystems, bei dem die Kommunikationseinheiten dazu eingerichtet sind, ein Ad-hoc-Netzwerk aufzubauen. Die Kommunikationseinheiten können mithin flexibel auf Beeinträchtigungen, insbesondere Störungen, des Übertragungspfades reagieren und einen alternativen Übertragungspfad ermitteln.

Weiterhin bevorzugt ist eine Ausführungsform des erfindungsgemäßen Übertragungssystems, bei dem mindestens eine der Kommunikationseinheiten eine Schnittstelle aufweist, die zur Übertragung von Informationen des Feldelements, insbesondere Diagnosedaten, an die Kommunikationseinheit ausgebildet ist.

Besonders bevorzugt ist eine Ausführungsform des erfindungsgemäßen Übertragungssystems, bei dem die Schnittstelle zur Übertragung von Informationen, insbesondere Steuerungsanweisungen, von der Kommunikationseinheit an das Feldelement ausgebildet ist. Dies ermöglicht die Steuerung und Kontrolle des Feldelementes über die Kontrolleinheit.

In einer bevorzugten Weiterbildung des erfindungsgemäßen Übertragungssystems ist vorgesehen, dass mindestens eine der Kommunikationseinheiten dazu ausgebildet ist, über die Energieversorgung des zugehörigen Feldelements mit Energie versorgt zu werden. Hierdurch kann auf eine eigene Energieversorgung des Kommunikationsmoduls verzichtet werden.

Eine besonders bevorzugte Ausführungsform des erfindungsgemäßen Übertragungssystems weist zumindest eine mobile Kontrolleinheit mit einer Kommunikationseinheit auf, die dazu ausgebildet ist, mit Feldelementen des schienengebundenen Verkehrssystems zu kommunizieren. Insbesondere kann somit die Wartung durch eine Fachkraft über die Kontrolleinheit und/oder die mobile Kontrolleinheit besonders einfach erfolgen.

Die der Erfindung zugrunde liegende Aufgabe wird weiterhin gelöst durch ein schienengebundenes Verkehrssystem mit einem erfindungsgemäßen Datenübertragungssystem.

Weiterhin wird die der Erfindung zugrunde liegende Aufgabe gelöst durch Verwendung von zur drahtlosen Datenübertragung ausgebildeten Kommunikationseinheiten an Feldelementen eines schienengebundenen Verkehrssystems, zur Datenübertragung zwischen einem Feldelement und einer Kontrolleinheit entlang eines Übertragungspfades von verfügbaren Feldelementen, wobei die Kommunikationseinheit die Verfügbarkeit der Feldelemente ermittelt, und wobei die auf dem Übertragungspfad liegenden Feldelemente über ihre Kommunikationseinheiten drahtlos miteinander kommunizieren.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

- Fig. 1: zeigt eine schematische Ansicht eines Datenübertragungssystems innerhalb eines schienengebundenen Verkehrssystems;
- Fig. 2: zeigt einen ermittelten Übertragungspfad zwischen einem ersten Feldelement und einer Kontrolleinheit innerhalb des Datenübertragungssystems aus Fig. 1;
- Fig. 3: zeigt einen alternativen Übertragungspfad in Folge einer Störung des Übertragungspfades aus Fig. 2;
- Fig. 4: zeigt ein erfindungsgemäßes Verfahren zur Ermittlung eines Übertragungspfades entlang verfügbarer Feldelemente.

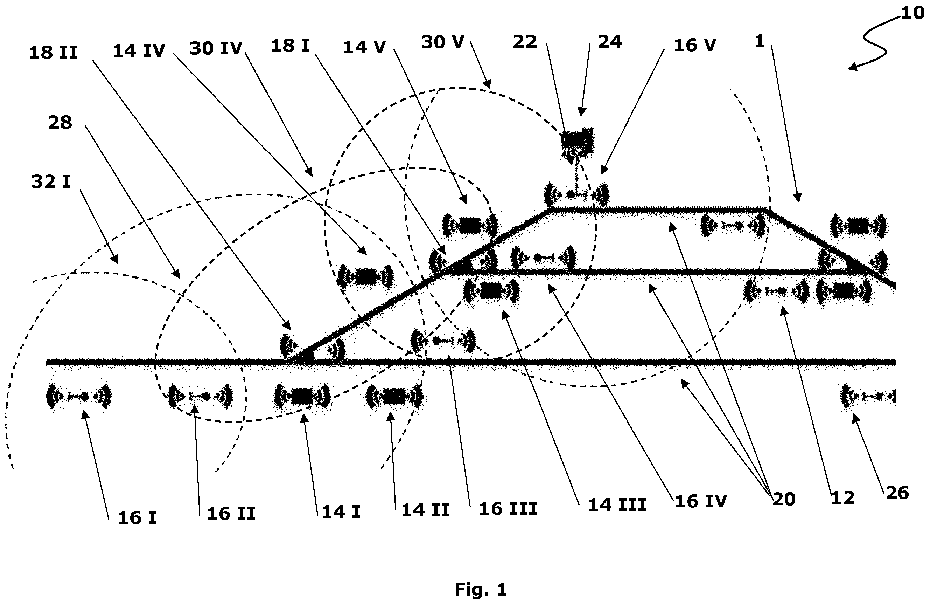

**Fig. 1** zeigt eine schematische Ansicht eines Datenübertragungssystems **10** mit Feldelementen **12** in Form von Achszählern **14 I-V,** in Form von Signalen **16 I-V** und in Form von Weichen **18 I - II** eines schienengebundenen Verkehrssystems **1** (aus Gründen der Übersichtlichkeit ist lediglich ein Feldelement 12 mit einem Bezugszeichen versehen). Die Feldelemente 12 sind entlang von Schienen **20** angeordnet und dienen der Überwachung des Schienenverkehrs. Ein Feldelement 12, insbesondere das Signal 16 V ist über eine Datenleitung **22** mit einer Kontrolleinheit **24** verbunden.

Die Feldelemente 12 weisen jeweils eine Kommunikationseinheit **26** zur drahtlosen Kommunikation mit benachbarten Feldelementen 12 auf. Feldelemente 12 gelten als benachbart, wenn in einem störungsfreien Zustand die Signalreichweiten **28** der Feldelemente 12 zur Kommunikation mit dem jeweils anderen Feldelement 12 ausreichen. Die Signalreichweite 28 kann dabei bei baugleichen Kommunikationseinheiten 26 aufgrund äußerer Gegebenheiten, insbesondere der Landschaft und/oder Gebäuden, abweichen.

Der Achszähler 14 V weist gemäß Fig. 1 eine Signalreichweite **30 V** auf, die eine Kommunikation mit Signal 16 V, dem Signal 16 IV, dem Signal 16 III, der Weiche 18 I, dem Achszähler 14 III und dem Achszähler 14 IV zulässt.

Der Achszähler 14 IV weist eine Signalreichweite **30 IV** auf, die eine Kommunikation mit Achszähler 14 V, Weiche 18 I, Weiche 18 II, Signal 16 II und Achszähler 14 I zulässt.

Das Signal 16 I weist lediglich eine Signalreichweite **32 I** auf, welche die Kommunikation mit dem Signal 16 II ermöglicht.

Analog hierzu lassen die Signalreichweiten 28 aller Feldelemente 12 die Kommunikation mit innerhalb der Signalreichweiten 28 befindlichen Feldelementen 12 zu.

Mithin liegt eine Überlagerung verschiedener Signalreichweiten 28 innerhalb des Datenübertragungssystems 10 vor, was eine Vielzahl an Kommunikationswegen zwischen den Feldelementen 12 ermöglicht.

Zur Bestimmung der benachbarten Feldelemente 12 wird eine Verfügbarkeitsanfrage an alle umliegenden Feldelemente 12 gesendet. Feldelemente 12, die eine solche Verfügbarkeitsanfrage erhalten, senden eine Rückmeldung an das Ausgangs-Feldelement 12 der Verfügbarkeitsanfrage und leiten die Verfügbarkeitsanfrage zugleich über deren Signalreichweite 28 an umliegende Feldelemente 12 weiter. Dieses Vorgehen wird solange durchgeführt, bis keine neuen verfügbaren Feldelemente 12 auf die Verfügbarkeitsanfrage reagieren und zumindest einem Feldelement 12 die Verfügbarkeit der Kontrolleinheit 24 über die Datenleitung 22 bestätigt wurde.

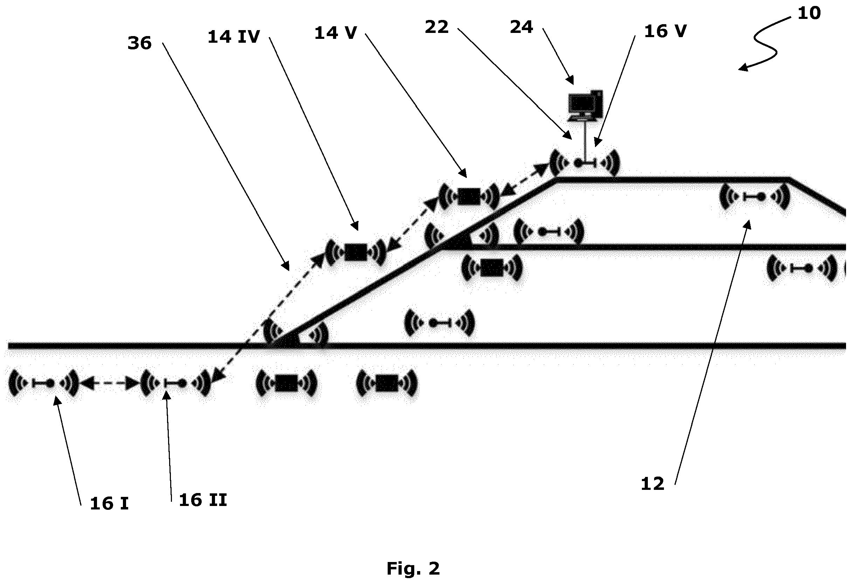

**Fig. 2** zeigt die schematische Ansicht des Datenübertragungssystems 10 aus Fig. 1. Auf Grundlage der durch die Verfügbarkeitsanfrage bestimmten verfügbaren Feldelemente 12 ermittelt das Signal 16 I, insbesondere jedoch alle Feldelemente 12, zumindest einen Übertragungspfad **36** entlang verfügbarer Feldelemente 16 II, 14 IV, 14 V und 16 V zur Kontrolleinheit 24, wobei der Übertragungspfad 36 zwischen Signal 16 V und Kontrolleinheit 24 über die Datenleitung 22 verläuft.

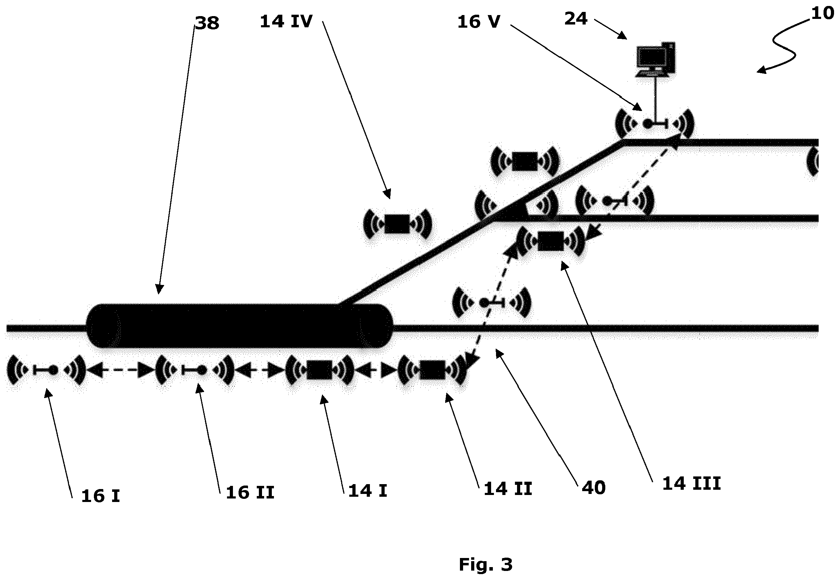

**Fig. 3** zeigt die schematische Ansicht des Datenübertragungssystems 10 aus Fig. 1, wobei ein zeitweise Störung **38** in Form eines Zugs den ermittelten Übertragungspfad 36 (siehe Fig. 2) des Signals 16 I zwischen Signal 16 II und Achszähler 14 IV stört.

Die Störung wird durch das im Übertragungspfad 36 (siehe Fig. 2) unmittelbar vor der Störung befindliche Signal 16 II an das Signal 16 I zurückgemeldet. Das Signal 16 I kann diesfalls auf einen weiteren, im Rahmen der Verfügbarkeitsanfrage ermittelten alternativen Übertragungspfad **40** zurückgreifen und die Daten entlang des alternativen Übertragungspfades 40 über die Feldelemente (hier: 16 II, 14 I, 14 II, 14 III und 16 V) an die Kontrolleinheit 24 übermitteln.

Bei Vorliegen von lediglich einem einzigen ermittelten Übertragungspfad 36 kann vorgesehen sein, die Bestimmung eines alternativen Übertragungspfades während des Datenübertragungsprozesses entlang von verfügbaren Feldelementen 12 durchzuführen. Insbesondere kann das Signal 16 I eine weitere Verfügbarkeitsanfrage senden, um die aktualisierte Verfügbarkeit der Feldelemente 12 während der auftretenden Störung zu Bestimmung eines ungestörten Übertragungspfades zur Kontrolleinheit 24 zu ermitteln.

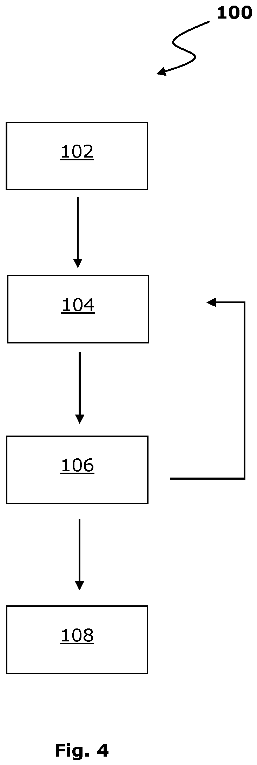

**Fig. 4** zeigt die Übertragungspfadermittlung **100** eines Übertragungspfades im Rahmen des erfindungsgemäßen Verfahrens zur Datenübertragung von einem Absender-Feldelement zu einer Kontrolleinheit entlang verfügbarer Feldelemente.

In einem ersten Verfahrensschritt **102** sendet ein Absender-Feldelement eine Verfügbarkeitsanfrage an umliegende Feldelemente. Von der Verfügbarkeitsanfrage erreichte Feldelemente antworten in einem Verfahrensschritt **104** dem Absender-Feldelement mittelbar und/oder unmittelbar durch Rückgabe einer Verfügbarkeitsinformation. Von der Verfügbarkeitsanfrage nicht erreichte Feldelemente antworten mithin nicht auf die Verfügbarkeitsanfrage und gelten als nicht verfügbar.

In einem weiteren Verfahrensschritt **106** wird die Verfügbarkeitsanfrage von den erreichten Feldelementen an deren Umgebung weitergeleitet und der Verfahrensschritt 104 wiederholt. Dabei wird die Verfügbarkeitsinformation mittelbar über die Feldelemente, die die Verfügbarkeitsanfrage weitergeleitet haben, an das Absender-Feldelement zurückgegeben.

Die Verfahrensschritte 106 und 104 werden dabei solange wiederholt, bis keine neuen Verfügbarkeitsinformationen an das Absender-Feldelement zurückgegeben werden und zumindest einem Feldelement die Verfügbarkeit (Erreichbarkeit) der Kontrolleinheit bestätigt wurde.

Anschließend ermittelt das Absender-Feldelement in einem Verfahrensschritt **108** einen Übertragungspfad entlang verfügbarer Feldelemente und speichert diesen zur Verwendung für bevorstehenden Datenübertragungen.

Im Fall einer Störung während der Datenübertragung und/oder durch Ablauf der Gültigkeit, insbesondere durch Ablauf einer Gültigkeitsfrist, des ermittelten Übertragungspfads kann vorgesehen sein, die Übertragungspfadermittlung 100 automatisch, beginnend mit dem Verfahrensschritt 102 erneut durchzuführen.

Unter Vornahme einer Zusammenschau aller Figuren der Zeichnung betrifft die Erfindung ein Verfahren zur Datenübertragung innerhalb eines schienengebundenen Verkehrssystems 1 bestehend aus mehreren Feldelementen 12, wobei die Datenübertragung über einen flexiblen drahtlosen Übertragungspfad 36, 40 zwischen einem Absender-Feldelement 16 I und einer Kontrolleinheit 24 entlang verfügbarer Feldelemente 12 erfolgt. Die Erfindung betrifft weiterhin ein Datenübertragungssystem 10 zur Anwendung des Verfahrens sowie ein schienengebundenes Verkehrssystem 1 mit einem solchen Datenübertragungssystem 10. Weiterhin betrifft die Erfindung die Verwendung von Kommunikationseinheiten 26 an Feldelementen 12 eines schienengebundenen Verkehrssystems 1 zur Ausbildung des Datenübertragungssystems 10.

### Literaturverzeichnis

[1] SIGNAL + DRAHT (110); Ausgabe 12/2018; Seite 12 ff.; Artikel: Intelligenter Weichenantrieb;
[2] CN 102063796 A: Intelligent traffic control system and method based on wireless mesh ad hoc network;
[3] Wayside Train Separation; Lineside Electronic Unit LEU-2G; Ansaldo STS
[4] A Study on the Development of the Train Control System Data Transmision Technology Using a Wireless Mesh";
[5] "UWB, Multi-sensors and Wifi-Mesh based precision positioning for urban rail traffic".

### Bezugszeichenliste

Schienengebundenes Verkehrssystem **1;**
Datenübertragungssystem **10**;
Feldelemente **12;**
Achszähler **14 I-V;**
Signale **16 I-V;**
Weichen **18 I - II;**
Schienen **20;**
Datenleitung **22;**
Kontrolleinheit **24;**
Kommunikationseinheit **26;**
Signalreichweite **28;**
Signalreichweite **30 V;**
Signalreichweite **30 IV;**
Signalreichweite **32 I;**
Übertragungspfad **36;**
Zeitweise Störung **38;**
alternativer Übertragungspfad **40;**
Übertragungspfadermittlung **100;**
Verfahrensschritt **102;**
Verfahrensschritt **104;**
Verfahrensschritt **106;**
Verfahrensschritt **108.**

## Patentansprüche

1. Verfahren zur Datenübertragung innerhalb eines schienengebundenen Verkehrssystems (1) mit einem ersten Feldelement (12, 14 I-V, 16 I-V, 18 I-II) mit einer Kommunikationseinheit (26) und mindestens einem weiteren Feldelement (12, 14 I-V, 16 I-V, 18 I-II) mit einer weiteren Kommunikationseinheit (26), wobei die Datenübertragung zwischen dem ersten Feldelement (12, 14 I-V, 16 I-V, 18 I-II), und einer Kontrolleinheit (24) des schienengebundenen Verkehrssystems (1) entlang eines Übertragungspfades (36, 40) erfolgt,
**dadurch gekennzeichnet,**
**dass** der Übertragungspfad (36, 40) in Abhängigkeit der Verfügbarkeit der weiteren Feldelemente (12, 14 I-V, 16 I-V, 18 I-II) ermittelt wurde, und dass die Datenübertragung über mindestens eines der weiteren Feldelemente (12, 14 I-V, 16 I-V, 18 I-II) erfolgt, und dass die Daten zwischen den Feldelementen (12, 14 I-V, 16 I-V, 18 I-II) drahtlos übertragen werden.

2. Verfahren nach Anspruch 1, **dadurch gekennzeichnet, dass** zur Datenübertragung zwischen den Feldelementen (12, 14 I-V, 16 I-V, 18 I-II) ein Ad-hoc-Netzwerk aufgebaut wird.

3. Verfahren nach einem der vorhergehenden Ansprüche, **dadurch gekennzeichnet, dass** für jede Datenübertragung ein Übertragungspfad (36, 40) ermittelt wird.

4. Verfahren nach einem der vorhergehenden Ansprüche, **dadurch gekennzeichnet, dass** während der Datenübertragung die Verfügbarkeit der Feldelemente (12, 14 I-V, 16 I-V, 18 I-II), insbesondere in regelmäßigen Zeitabständen, überprüft wird und der ermittelte Übertragungspfad (36, 40) geändert wird, wenn die Verfügbarkeit eines der Feldelemente (12, 14 I-V, 16 I-V, 18 I-II), über die der zuvor ermittelte Übertragungspfad (36, 40) verläuft, nicht mehr gegeben ist.

5. Verfahren nach Anspruch 4, **dadurch gekennzeichnet, dass** das erste Feldelement (12, 14 I-V, 16 I-V, 18 I-II) die Verfügbarkeit der benachbarten Feldelemente (12, 14 I-V, 16 I-V, 18 I-II), insbesondere aller Feldelemente (12, 14 I-V, 16 I-V, 18 I-II), durch Empfang von Statusmitteilung und/oder durch die Signalstärke der anderen Feldelemente (12, 14 I-V, 16 I-V, 18 I-II) ermittelt.

6. Verfahren nach einem der vorhergehenden Ansprüche, **dadurch gekennzeichnet, dass** das erste, insbesondere alle, Feldelemente (12, 14 I-V, 16 I-V, 18 I-II) zum Empfang von Anweisungen ausgebildet sind.

7. Verfahren nach einem der vorhergehenden Ansprüche, **dadurch gekennzeichnet, dass** der Zustand, insbesondere Diagnosedaten, des ersten Feldelements (12, 14 I-V, 16 I-V, 18 I-II) mittels der Datenübertragung zur Kontrolleinheit (24) übertragen werden.

8. Verfahren nach einem der vorhergehenden Ansprüche, **dadurch gekennzeichnet, dass** zur Datenübertragung ausschließlich die auf dem Übertragungspfad (36, 40) befindlichen Feldelemente (12, 14 I-V, 16 I-V, 18 I-II) miteinander kommunizieren.

9. Datenübertragungssystem (10) eines schienengebundenen Verkehrssystems (1) zur Ausführung eines Verfahrens, insbesondere gemäß einem der Ansprüche 1 bis 8, mit einem ersten Feldelement (12, 14 I-V, 16 I-V, 18 I-II) und einer über eine Schnittstelle mit dem Feldelement (12, 14 I-V, 16 I-V, 18 I-II) verbundenen Kommunikationseinheit (26), mindestens einem weiteren Feldelement (12, 14 I-V, 16 I-V, 18 I-II) mit einer weiteren Kommunikationseinheit (26) und einer Kontrolleinheit (24), wobei die Kommunikationseinheiten (26) und die Kontrolleinheit (24) zum Senden und Empfangen von Informationen ausgebildet sind,
**dadurch gekennzeichnet,**
**dass** die Kommunikationseinheiten (26) zur Ermittlung eines geeigneten Übertragungspfades (36, 40) entlang der verfügbaren Kommunikationseinheiten (26) von und/oder zu der Kontrolleinheit (24) ausgebildet sind.

10. Übertragungssystem nach Anspruch 9, **dadurch gekennzeichnet, dass** die Kommunikationseinheiten (26) dazu eingerichtet sind, ein Ad-hoc-Netzwerk aufzubauen.

11. Übertragungssystem nach Anspruch 9 oder 10, **dadurch gekennzeichnet, dass** mindestens eine der Kommunikationseinheiten (26) eine Schnittstelle aufweist, die zur Übertragung von Informationen des Feldelements (12, 14 I-V, 16 I-V, 18 I-II), insbesondere Diagnosedaten, an die Kommunikationseinheit (26) ausgebildet ist.

12. Übertragungssystem nach Anspruch 11, **dadurch gekennzeichnet, dass** die Schnittstelle zur Übertragung von Informationen, insbesondere Steuerungsanweisungen, von der Kommunikationseinheit (26) an das Feldelement (12, 14 I-V, 16 I-V, 18 I-II) ausgebildet ist.

13. Übertragungssystem nach einem der Ansprüche 9 bis 12, **dadurch gekennzeichnet, dass** mindestens eine der Kommunikationseinheiten (26) dazu ausgebildet ist, über die Energieversorgung des zugehörigen Feldelements (12, 14 I-V, 16 I-V, 18 I-II) mit Energie versorgt zu werden.

14. Schienengebundenes Verkehrssystem (1) mit einem Datenübertragungssystem (10) gemäß einem der Ansprüche 9 bis 13.

15. Verwendung von zur drahtlosen Datenübertragung ausgebildeten Kommunikationseinheiten (26) an Feldelementen (12, 14 I-V, 16 I-V, 18 I-II) eines schienengebundenen Verkehrssystems (1), zur Datenübertragung zwischen einem Feldelement (12, 14 I-V, 16 I-V, 18 I-II) und einer Kontrolleinheit (24) entlang eines Übertragungspfades (36, 40) von verfügbaren Feldelementen (12, 14 I-V, 16 I-V, 18 I-II), wobei die Kommunikationseinheit (26) die Verfügbarkeit der Feldelemente (12, 14 I-V, 16 I-V, 18 I-II) ermittelt, und wobei die auf dem Übertragungspfad (36, 40) liegenden Feldelemente (12, 14 I-V, 16 I-V, 18 I-II) über ihre Kommunikationseinheiten drahtlos miteinander kommunizieren.

## Geänderte Patentansprüche

### Geänderte Patentansprüche gemäss Regel 137(2) EPÜ.

1. Verfahren zur Datenübertragung innerhalb eines schienengebundenen Verkehrssystems (1) mit einem ersten Feldelement (12, 14 I-V, 16 I-V, 18 I-II) mit einer Kommunikationseinheit (26) und mindestens einem weiteren Feldelement (12, 14 I-V, 16 I-V, 18 I-II) mit einer weiteren Kommunikationseinheit (26),
wobei die Datenübertragung über mindestens eines der weiteren Feldelemente (12, 14 I-V, 16 I-V, 18 I-II) erfolgt, und die Daten zwischen den Feldelementen (12, 14 I-V, 16 I-V, 18 I-II) drahtlos übertragen werden,
**dadurch gekennzeichnet,**
**dass** die Datenübertragung zwischen dem ersten Feldelement (12, 14 I-V, 16 I-V, 18 I-II), und einer Kontrolleinheit (24) des schienengebundenen Verkehrssystems (1) entlang eines einzigen Übertragungspfades (36, 40) erfolgt, und
**dass** der Übertragungspfad (36, 40) in Abhängigkeit der Verfügbarkeit der weiteren Feldelemente (12, 14 I-V, 16 I-V, 18 I-II) ermittelt wurde.

2. Verfahren nach Anspruch 1, **dadurch gekennzeichnet, dass** zur Datenübertragung zwischen den Feldelementen (12, 14 I-V, 16 I-V, 18 I-II) ein Ad-hoc-Netzwerk aufgebaut wird.

3. Verfahren nach einem der vorhergehenden Ansprüche, **dadurch gekennzeichnet, dass** für jede Datenübertragung ein Übertragungspfad (36, 40) ermittelt wird.

4. Verfahren nach einem der vorhergehenden Ansprüche, **dadurch gekennzeichnet, dass** während der Datenübertragung die Verfügbarkeit der Feldelemente (12, 14 I-V, 16 I-V, 18 I-II), insbesondere in regelmäßigen Zeitabständen, überprüft wird und der ermittelte Übertragungspfad (36, 40) geändert wird, wenn die Verfügbarkeit eines der Feldelemente (12, 14 I-V, 16 I-V, 18 I-II), über die der zuvor ermittelte Übertragungspfad (36, 40) verläuft, nicht mehr gegeben ist.

5. Verfahren nach Anspruch 4, **dadurch gekennzeichnet, dass** das erste Feldelement (12, 14 I-V, 16 I-V, 18 I-II) die Verfügbarkeit der benachbarten Feldelemente (12, 14 I-V, 16 I-V, 18 I-II), insbesondere aller Feldelemente (12, 14 I-V, 16 I-V, 18 I-II), durch Empfang von Statusmitteilung und/oder durch die Signalstärke der anderen Feldelemente (12, 14 I-V, 16 I-V, 18 I-II) ermittelt.

6. Verfahren nach einem der vorhergehenden Ansprüche, **dadurch gekennzeichnet, dass** das erste, insbesondere alle, Feldelemente (12, 14 I-V, 16 I-V, 18 I-II) zum Empfang von Anweisungen ausgebildet sind.

7. Verfahren nach einem der vorhergehenden Ansprüche, **dadurch gekennzeichnet, dass** der Zustand, insbesondere Diagnosedaten, des ersten Feldelements (12, 14 I-V, 16 I-V, 18 I-II) mittels der Datenübertragung zur Kontrolleinheit (24) übertragen werden.

8. Verfahren nach einem der vorhergehenden Ansprüche, **dadurch gekennzeichnet, dass** zur Datenübertragung ausschließlich die auf dem Übertragungspfad (36, 40) befindlichen Feldelemente (12, 14 I-V, 16 I-V, 18 I-II) miteinander kommunizieren.

9. Datenübertragungssystem (10) eines schienengebundenen Verkehrssystems (1) zur Ausführung eines Verfahrens, insbesondere gemäß einem der Ansprüche 1 bis 8, mit einem ersten Feldelement (12, 14 I-V, 16 I-V, 18 I-II) und einer über eine Schnittstelle mit dem Feldelement (12, 14 I-V, 16 I-V, 18 I-II) verbundenen Kommunikationseinheit (26), mindestens einem weiteren Feldelement (12, 14 I-V, 16 I-V, 18 I-II) mit einer weiteren Kommunikationseinheit (26) und einer Kontrolleinheit (24), wobei die Kommunikationseinheiten (26) und die Kontrolleinheit (24) zum Senden und Empfangen von Informationen ausgebildet sind,
**dadurch gekennzeichnet,**
**dass** die Kommunikationseinheiten (26) zur Ermittlung eines geeigneten Übertragungspfades (36, 40) entlang der verfügbaren Kommunikationseinheiten (26) von und/oder zu der Kontrolleinheit (24) ausgebildet sind.

10. Übertragungssystem nach Anspruch 9, **dadurch gekennzeichnet, dass** die Kommunikationseinheiten (26) dazu eingerichtet sind, ein Ad-hoc-Netzwerk aufzubauen.

11. Übertragungssystem nach Anspruch 9 oder 10, **dadurch gekennzeichnet, dass** mindestens eine der Kommunikationseinheiten (26) eine Schnittstelle aufweist, die zur Übertragung von Informationen des Feldelements (12, 14 I-V, 16 I-V, 18 I-II), insbesondere Diagnosedaten, an die Kommunikationseinheit (26) ausgebildet ist.

12. Übertragungssystem nach Anspruch 11, **dadurch gekennzeichnet, dass** die Schnittstelle zur Übertragung von Informationen, insbesondere Steuerungsanweisungen, von der Kommunikationseinheit (26) an das Feldelement (12, 14 I-V, 16 I-V, 18 I-II) ausgebildet ist.

13. Übertragungssystem nach einem der Ansprüche 9 bis 12, **dadurch gekennzeichnet, dass** mindestens eine der Kommunikationseinheiten (26) dazu ausgebildet ist, über die Energieversorgung des zugehörigen Feldelements (12, 14 I-V, 16 I-V, 18 I-II) mit Energie versorgt zu werden.

14. Schienengebundenes Verkehrssystem (1) mit einem Datenübertragungssystem (10) gemäß einem der Ansprüche 9 bis 13.

15. Verwendung von zur drahtlosen Datenübertragung ausgebildeten Kommunikationseinheiten (26) an Feldelementen (12, 14 I-V, 16 I-V, 18 I-II) eines schienengebundenen Verkehrssystems (1), zur Datenübertragung zwischen einem Feldelement (12, 14 I-V, 16 I-V, 18 I-II) und einer Kontrolleinheit (24) entlang eines einzigen Übertragungspfades (36, 40) von verfügbaren Feldelementen (12, 14 I-V, 16 I-V, 18 I-II), wobei die Kommunikationseinheit (26) die Verfügbarkeit der Feldelemente (12, 14 I-V, 16 I-V, 18 I-II) ermittelt, und wobei die auf dem Übertragungspfad (36, 40) liegenden Feldelemente (12, 14 I-V, 16 I-V, 18 I-II) über ihre Kommunikationseinheiten drahtlos miteinander kommunizieren.
